# EUROPEAN PATENT SPECIFICATION

(11) **EP 0 998 145 B1**
(45) Date of publication and mention of the grant of the patent: **27.03.2002**
(21) Application number: 99308282.5
(22) Date of filing: 20.10.1999
(51) Int. Cl.: H04N 7/16

(54) **Broadcasting interactive applications**
Übertragung von interaktiven Anwendungen
Transmission d'applications interactives

(30) Priority: 26.10.1998 EP 98308728
(43) Date of publication of application: 03.05.2000
(73) Proprietor: Two Way TV Limited, Avonmore Road, London W14 8TS (GB)
(72) Inventor: Malaure, Jason Robert, Twickenham, Middlesex TW2 5RN (GB); Kydd, Richard Andrew, Twickenham, Middlesex TW2 5TT (GB); Cornwell, Simon Anthony Vivian, London NW3 4SS (GB)
(74) Representative: Skone James, Robert Edmund

(56) References cited:
- EP-A- 0 833 511
- WO-A-96/34486
- WO-A-96/41478

## Description

The present invention relates to a method and apparatus for broadcasting a scheduled interactive application to a plurality of users via respective user interfaces.

In conventional interactive broadcast systems, scheduled interactive applications may be provided in which real time data is broadcast to user interfaces from a scheduled start time onwards. The users may be informed of the scheduled start time by an electronic programme guide (EPG) (see, for example, WO-A-96/34486). Alternatively the scheduled start time may be advertised in a TV guide magazine. Examples of interactive applications include video games, home shopping, quiz games and games linked to TV broadcasts.

An EPG is a system for broadcasting information about television to viewers. Typically, a television schedule can be displayed as an array of irregular cells that vary dimensionally in length and in more sophisticated applications, it can include means to allow authorised viewers to obtain access to television services.

It is often necessary for the user interfaces to download set up data prior to the scheduled start time. For instance it may be necessary for the user interfaces to run an executable computer program in order to take part in the application. The application may also require the user interfaces to display video clips or bitmaps, or play back sound samples during the application and it may not be possible to download this data in real time during the application. Therefore setup data (e.g. executable program files, bitmaps, sound samples, video clips, and other multimedia and data resources) is placed on a broadcast carousel prior to the scheduled start time whereby the setup data is repeatedly broadcast to the user interfaces. The user interface is then ready to take part in the scheduled interactive application by downloading the real time data as it is broadcast from the scheduled start time onwards. Up to now, the number of interactive applications typically available at any one time has been small, for example three or four. It has therefore been possible for set-up data for all these applications to be downloaded to the user interfaces whether or not a user actually wishes to implement one-of the applications. However, with the arrival of digital transmission, many more applications can be available, for example up to 150 or more. It is not practical to download set-up data for all these applications to each user interface.

In accordance with a first aspect of the present invention there is provided a method of broadcasting a scheduled interactive application to a plurality of users via respective user interfaces, the method comprising:
a) placing set-up data on a broadcast carousel prior to a scheduled start time whereby the set-up data is repeatedly broadcast to the user interfaces; and
b) broadcasting real time data related to the application to the user interfaces at the scheduled start time, wherein the method further comprises:
c) broadcasting a status flag to the user interfaces, the status flag being indicative of the status of the set-up data broadcast carried out in step a).

In accordance with a second aspect of the present invention, there is provided apparatus for broadcasting a scheduled interactive application to a plurality of users via respective user interfaces, the apparatus comprising:
a) means for placing set-up data on a broadcast carousel prior to a scheduled start time whereby the set-up data is repeatedly broadcast to the user interfaces; and
b) means for broadcasting real time data related to the application to the user interfaces at the scheduled start time, wherein the apparatus further comprises:
c) means for broadcasting a status flag to the user interfaces, the status flag being indicative of the status of the set-up data broadcast means.

On or after receipt of the status flag, the user interfaces can provide their respective user with a status notification, even if the user interface is not presently receiving data from the broadcast carousel. The status flag allows the availability of the set-up data to be notified to each user interface for each available application but since it has a relatively small size compared with the set-up data itself, each user interface can download each status flag. Then, when a user wishes to implement one of the applications, he can note from the receipt of the status flag that that application is available and implement full download of the set-up data.

The status flag can also provide a wide variety of other status information relating to the broadcast. For instance the status flag may be indicative of the start or stop times of the broadcasts. The status flag may indicate the start/stop times directly by being broadcast at the start/stop times of the broadcast. Thus when the user interfaces receive the status flag they know that one of the broadcasts has started or finished. Alternatively the status flag may indicate the start and stop times indirectly by carrying information relating to the start/stop times - for instance the status flag may carry the message "real time data broadcast will start at 7:30" or "setup data broadcast will start in five minutes" etc.

The scheduled start time of the real time broadcast may be advertised in a TV guide magazine. However preferably the method further comprises broadcasting EPG data to the user interfaces, the EPG data being indicative of the scheduled start time of the real time data broadcast.

The user can be provided with a status notification in a number of ways - including a highlight (e.g. a colour highlight), flag or icon against an EPG programme listing; a pop-up icon; an on-screen strap; or an audio message.

The set-up data, status flag and real time data may be broadcast to the user interfaces over a variety of transmission media, including the vertical blanking interval (VBI) of a normal TV signal or on a separate radio FM-SCA channel or other data format such as a cable modem. Other forms of transmission including satellite and the internet may also be used.

The set-up data and real time data typically originates at a central computer system (CCS). The user interfaces will typically be remote not only from the CCS but also from each other.

The status flag and set-up data are preferably time-multiplexed on a common broadcast frequency.

Similarly the status flag and EPG data are preferably broadcast time division multiplexed at the same frequencies. This has the advantage that a user interface tuned to receive the EPG data does not need to switch frequencies to receive the status flag.

The status flag may be sent only once, or may be repeatedly broadcast (and time-multiplexed with the EPG data in the case where a common frequency is used).

The scheduled interactive application may take a variety of different forms - for instance it may comprise a video game which is played simultaneously by a number of remote users, or a quiz game played simultaneously by a number of remote users. Alternatively the application may be broadcast in conjunction with a live TV event. For instance the application may enable the user to take part in a live TV quiz, or predict the occurrence of certain events in a live sporting event.

An example of the present invention will now be described with reference to the accompanying drawings, in which:
Figure 1 is a block diagram of a digital broadcast network;
Figure 2 is a block diagram of a user interface;
Figure 3 shows a number of EPG screens and a splash screen; and,
Figure 4 illustrates the timing of the broadcasts.

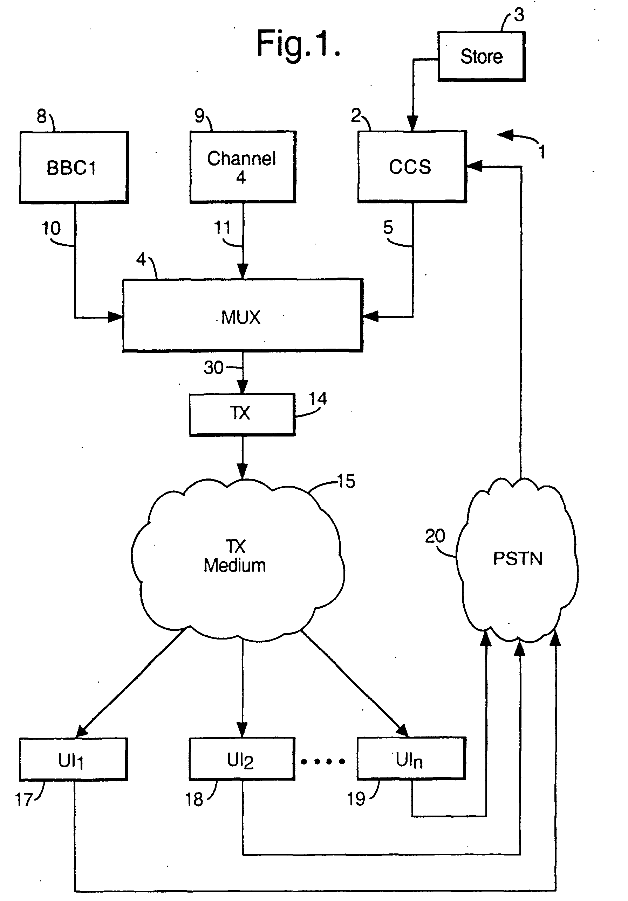

The digital broadcast network shown in Figure 1 comprises an interactive game control system 1 including a central computer system (CCS) 2 and an application data store 3. The application data store 3 contains set-up data and real time data which can be accessed and amended by the central computer system 2. The set-up data may comprise executable program files, bitmaps, sound samples, video clips, and other multimedia and data resources. The real time data comprises data which is broadcast after the scheduled start time (e.g. question/answer data for a quiz game application). The set-up data and real time data is fed at an appropriate time to a broadcast headend multiplexer 4 via a data feed 5. The CCS 2 also generates electronic programme guide (EPG) data which is fed to the multiplexer 4 via the data feed 5. Each item of EPG data includes a programme identifier (PID) and a system information (SI) table containing EPG information relating to that PID (e.g. name, scheduled start time, splash screen data etc.).

Broadcast TV stations 8 (BBC1) and 9 (Channel 4) (together with others not shown) each generate digital audio and video signals which are fed to the broadcast headend multiplexer 4 via respective data feeds 10,11. The data feeds 5,10,11 may be via dedicated cables or via broadcast on the air.

The broadcast TV stations 8,9 also generate EPG data which is fed to the multiplexer 4. Each item of EPG data includes a PID and a SI table containing EPG information relating to that PID (e.g. name, scheduled start time and broadcast TV station name).

The broadcast headend multiplexer 4 time division multiplexes the digital data from the data feeds 5,10,11 and outputs the data serially to a transmitter 14 as an MPEG-II transport stream 30 which then transmits the data over a transmission medium 15. The transmission medium may be any conventional medium such as wireless, satellite, cable, or Internet.

A number of user interfaces (UIs) 17,18,19 etc. receive data from the transmission medium 15. The UIs can also send data to the CCS 2 via the public-switched-telephone-network (PSTN) 20 (or other means not shown such as cable, Internet or satellite).

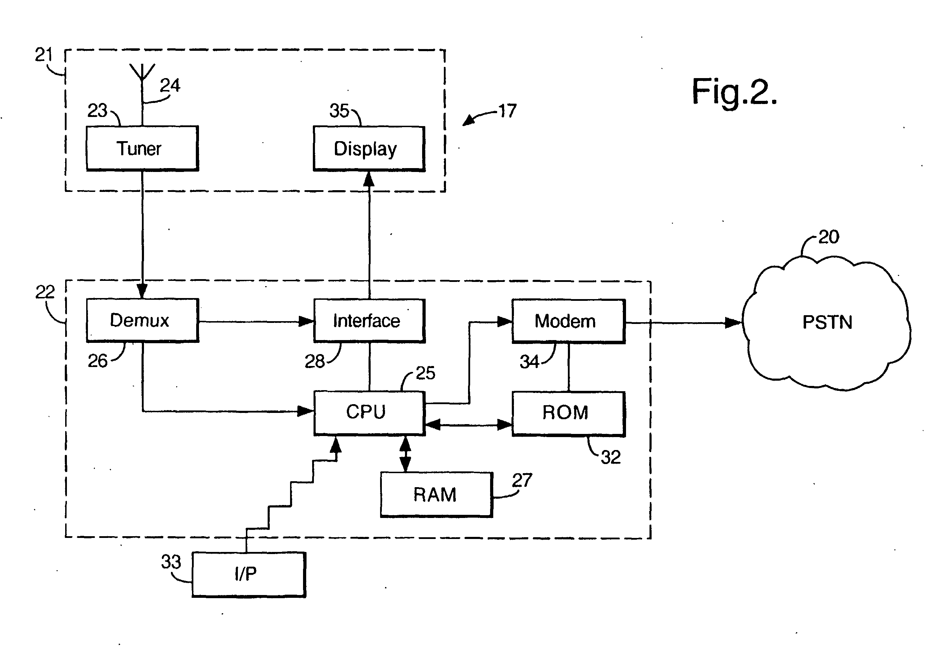

One of the user interfaces 17 is shown in detail in Figure 2. The UI comprises a conventional television set 21, a set-top box 22 and an input device 33. The television set 21 comprises a cathode ray tube (CRT) 35 and a tuner 23 coupled to an aerial 24. The tuner 23 is tuned to receive data from the transmission medium 15. The received data is passed to a demultiplexer 26 which demultiplexes_ the MPEG-II transport stream in accordance with the conventional MPEG-II format by using identifiers in the transmitted packets. Set-up data and real time data is fed to the CPU 25 and video/audio data is fed to a display interface 28.

The CPU 25 accesses a random access memory (RAM) 27 and a read only memory (ROM) 32 to compile a display signal which is passed to the display interface 28 and merged with the audio/video signal from the demultiplexer 26. The input device 33, such as a keyboard and/or mouse, provides input to the CPU 25 from a user. Return path data is returned to the CCS 2 by the CPU 25 via a modem 34 and the PSTN 20.

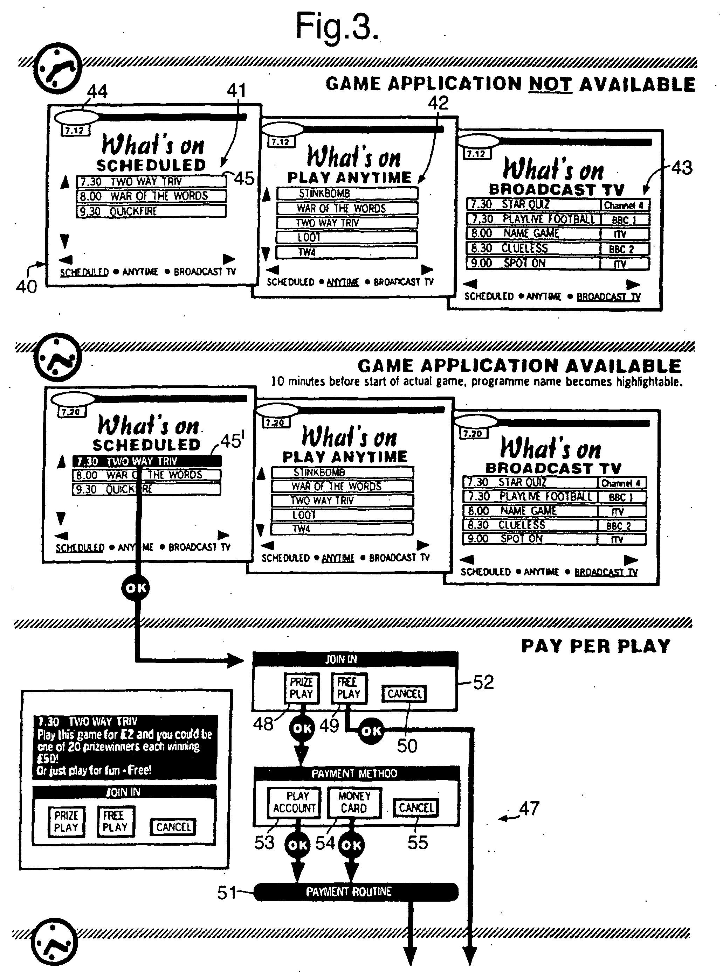

An example of an interactive service will now be described with reference to Figure 3 which is a flow diagram including a sequence of images which are presented to the user on the CRT 35 when the tuner 23 is tuned to receive data from the EPG transport stream 31.

By highlighting one of three selections 40, the user is either presented with a list 41 of scheduled programmes, a list 42 of play anytime programmes or a list 43 of broadcast TV programmes. The scheduled programmes include a programme entitled "Two Way Triv"® scheduled at a start time of 7:30, "War of the Words"® scheduled at a start time of 8:00, and "Quick Fire" scheduled at a start time of 9:30. The list 42 of play anytime programmes gives a number of interactive games ("Stinkbomb"® , "War of the Words"® etc.) which can be played at any desired time. The list 43 of broadcast TV programmes include a programme entitled "Star Quiz" scheduled at a start time of 7:30 on Channel 4, and a programme entitled "PlayLive Football"® scheduled at a start time of 7:30 on BBC 1. The lists 41-43 are compiled and periodically updated by the CPU 25 with reference to the received EPG data. The EPG screens also include a clock 44 indicating the current time (in this case 7:12).

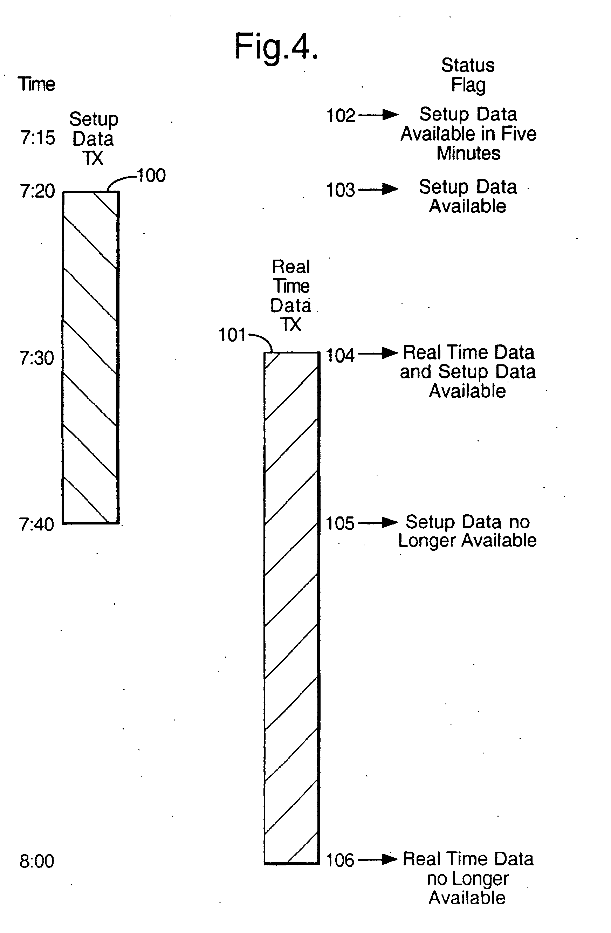

Figure 4 illustrates the setup data, real time data and status flag information broadcast during a forty-five minute period between 7:15 and 8:00. At 7:15 the CCS 2 inserts a status flag 102 into the EPG SI table which indicates that the setup data for the "Two Way Triv"® scheduled interactive application will be available in five minutes. On receipt of this status flag, the CPU 25 in the STB 22 causes the "Two Way TV"® icon 45 to turn amber.

Ten minutes before the scheduled start time of the "Two Way Triv"® program (i.e. at 7:20), the CCS 2 downloads setup data relating to the "Two Way Triv"® scheduled interactive application from the application data store 3, and feeds it to the broadcast headend multiplexer 4. The multiplexer 4 then places the data on the broadcast carousel whereby it repeatedly transmits the setup data on the transport stream 30 as indicated at 100 in Figure 4. At the same time, the CCS 2 inserts a status flag 103 in the EPG SI table in order to indicate that the "Two Way Triv"® setup data is now available on the transport stream 30. On receipt of the status flag, the CPU 25 turns the icon green as indicated at 45'. With the green icon 45' highlighted, the user can enter the game by pressing an OK button on the input device 33. The CPU 25 then generates a splash screen 47 using the splash screen information-in the transport stream 30.

The splash screen- for the "Two Way Triv"® programme starts with a "pay per play" routine 52 in which the user is first presented with a choice of prize play 48, free play 49 or cancel 50. If the free play icon 49 is selected the routine jumps to a copyright message (not shown) which is held on screen for a predetermined period. If the prize play icon 48 is selected, the user is presented with the choice of paying using his play account 53, money card 54, or cancelling 55. If the user selects either of the payment icons, the splash screen sequence jumps to a payment routine 51 in which the user is prompted to enter his play account pin number, or money card (e.g. Mondex) pin number. The CPU 25 then implements a credit check routine and jumps to the copyright message.

During the time that the splash screen 47 is displayed (i.e. after the user has selected the highlighted application 45') set-up data with the "Two Way Triv"® PID is downloaded-by CPU 25 and saved in the RAM 27. Once all of the set-up data has been downloaded (or sufficient components of it to allow execution to commence) timed execution of the scheduled interactive application can commence.

At the scheduled start time of 7.30, the CCS 2 generates real time question data which is broadcast to the user interfaces as indicated at 101 in Figure 4. At 7.30 the CPU 25 automatically enters a game mode in which the user is presented with.a series of questions based on the received question data. The user provides answers by selecting answer icons.

In the case of the "Two Way Triv"® game the questions and answers fill the entire CRT screen. In the case of "Star Quiz" the questions and answers are overlaid on a real-time television broadcast of a presenter reading out the questions to competitors in a television studio, originating from the Channel 4 broadcast TV station 9.

At the same time the CCS 2 inserts a status flag 104 in the EPG SI table in order to indicate that the real time data is now available along with the set-up data. If the user has not yet entered the game, then on receipt of this status flag the "Two Way Triv"® icon 45 is caused to start flashing by the CPU 25. This indicates that the user can still enter the game by highlighting the flashing icon 45 and pressing the OK button.

At 7:40 the setup data broadcast 100 ends, and the CCS 2 inserts a status flag 105 in the EPG SI table. On receipt of this status flag the "Two Way TRIV"® icon 45 turns red and stops flashing. The user can no longer enter the game after 7:40.

At the end of the real time data broadcast 101 at 8:00, the CPU 25 transmits the user's score to the CCS 2 via the modem 34. The CCS 2 also inserts a status flag 106 in the EPG SI table. On receipt of this status flag the "Two Way Triv"® icon 45 is deleted from the screen.

Each user has an account with a number of cash credits which are stored and managed by the CCS 2. On receipt of scores from a number of user interfaces the CCS 2 compares the scores and issues prizes to the users with the highest scores by adding cash credits to their accounts.

It will be appreciated that in this example, the downloading of set-up data for a single application has been described. In practice, many applications may be available at the same time and a status flag relating to each will be transmitted in the EPG data. However, the set-up data itself, although transmitted, will not be down loaded by a set top box until the user instructs it to do so after seeing that the status flag for that application indicates the application is available.

## Claims

1. A method of broadcasting a scheduled interactive application to a plurality of users via respective user interfaces, the method comprising:
a) placing set-up data on a broadcast carousel prior to a scheduled start time whereby the set-up data is repeatedly broadcast to the user interfaces; and
b) broadcasting real time data relating to the application to the user interfaces at the scheduled start time, wherein the method further comprises:
c) broadcasting a status flag to the user interfaces, the status flag being indicative of the status of the set-up data broadcast carried out in step a).

2. A method according to claim 1, wherein step a) comprises broadcasting the set-up data between a set-up start time and a set-up stop time, and wherein the status flag is indicative of the set-up start time or the set-up stop time.

3. A method according to claim 1 or 2, wherein step b) comprises broadcasting the real time data between a scheduled start time and a scheduled stop time, and wherein the status flag is indicative of the scheduled start time or the scheduled stop time.

4. A method according to any of the preceding claims, further comprising broadcasting electronic programme guide (EPG) data to the user interfaces, the EPG data being indicative of the scheduled start time for the real time data broadcast.

5. A method according to claim 4, wherein the EPG data is modified in accordance with the status flag so as to provide a visual indication of the state of the status flag.

6. A method according to claim 5, wherein the manner in which the name of the application is displayed to the user is indicative of the state of the status flag.

7. Apparatus for broadcasting a scheduled interactive application to a plurality of users via respective user interfaces, the apparatus comprising:
a) means (2) for placing set-up data on a broadcast carousel prior to a scheduled start time whereby the set-up data is repeatedly broadcast to the user interfaces; and
b) means (14,15) for broadcasting real time data relating to the application to the user interfaces at the scheduled start time, wherein the apparatus further comprises:
c) means (14,15) for broadcasting a status flag to the user interfaces, the status flag being indicative of the status of the set-up data broadcast means.

8. Apparatus according to claim 7, further comprising means (14,15) for broadcasting electronic programme guide (EPG) data to the user interfaces, the EPG data specifying the scheduled start time of the real time data broadcast.

## Patentansprüche

1. Ein Verfahren zum (Rund-)Senden einer planmäßigen Dialoganwendung an eine Mehrzahl Benutzer über entsprechende Benutzer-Schnittstellen, wobei das Verfahren umfaßt:
a) Einbringen von vorbereiteten Daten in ein Sendekarussell vor einer planmäßigen Startzeit, wodurch die vorbereiteten Daten wiederholt an die Benutzerschnittstellen gesendet werden; und
b) Senden von Echtzeitdaten, die sich auf die Anwendung beziehen, an die Benutzerschnittstellen zur planmäßigen Startzeit, wobei das Verfahren weiter umfaßt:
c) Senden eines Statuszeichens an die Benutzerschnittstellen, wobei das Statuskennzeichen bezeichnend für den Status der in Schritt a) ausgeführten Sendung von aufgerüsteten Daten ist.

2. Ein Verfahren nach Anspruch 1, wobei Schritt a) das Senden der aufgerüsteten Daten zwischen einer Aufrüst-Startzeit und einer Aufrüst-Beendigungszeit umfaßt und wobei das Statuszeichen kennzeichnend für die Aufrüst-Startzeit oder die Aufrüst-Beendigungszeit ist.

3. Ein Verfahren nach Anspruch 1 oder 2, wobei Schritt b) das Senden der Echtzeitdaten zwischen einer planmäßigen Startzeit und einer planmäßigen Beendigungszeit umfaßt und wobei das Statuskennzeichen kennzeichnend für die planmäßige Startzeit oder die planmäßige Beendigungszeit ist.

4. Ein Verfahren nach einem der vorhergehenden Ansprüche, weiter umfassend das Senden elektronischer Programmführungs-(EPG-)Daten an die Benutzerschnittstellen, wobei die EPG-Daten kennzeichnend für die planmäßige Startzeit der Echtzeitdatensendung sind.

5. Ein Verfahren nach Anspruch 4, wobei die EPG-Daten in Übereinstimmung mit dem Statuskennzeichen so modifiziert werden, daß eine sichtbare Angabe/Anzeige des Zustands des Statuskennzeichens bereitgestellt wird.

6. Ein Verfahren nach Anspruch 5, wobei die Art und Weise, in der der Name der Anwendung dem Benutzer angezeigt wird, kennzeichnend für den Zustand des Statuskennzeichens ist.

7. Vorrichtung zum Senden einer planmäßigen Dialoganwendung an eine Mehrzahl Benutzer über entsprechende Benutzerschnittstellen, wobei die Vorrichtung umfaßt:
a) Mittel (2) zum Einbringen aufgerüsteter Daten in ein Sendekarussell vor einer planmäßigen Startzeit, wodurch die aufgerüsteten Daten wiederholt an die Benutzerschnittstellen gesendet werden; und
b) Mittel (14, 15) zum Senden von Echtzeitdaten, die sich auf die Anwendung beziehen, an die Benutzerschnittstellen zu der planmäßigen Startzeit, wobei die Vorrichtung weiter umfaßt:
c) Mittel (14, 15) zum Senden eines Statuskennzeichens an die Benutzerschnittstellen, wobei das Statuskennzeichen kennzeichnend für den Status der Sendemittel der aufgerüsteten Daten ist.

8. Vorrichtung nach Anspruch 7, weiter umfassend Mittel (14, 15) zum Senden von elektronischen Programmführer-(EPG)-Daten an die Benutzerschnittstellen, wobei die EPG-Daten die planmäßige Startzeit der Echtzeitdatensendung spezifizieren.

## Revendications

1. Procédé de diffusion d'une application interactive planifiée vers une pluralité d'utilisateurs par l'intermédiaire d'interfaces utilisateur respectives, le procédé comprenant :
a) le placement de données de paramétrage sur un carrousel d'émission avant une heure de début planifiée, de sorte que les données de paramétrage soient diffusées de façon répétée vers les interfaces utilisateur ; et
b) la diffusion de données temps réel se rapportant à l'application vers les interfaces utilisateur à l'heure de début planifiée, dans lequel le procédé comprend de plus :
c) la diffusion d'un indicateur d'état vers les interfaces utilisateur, l'indicateur d'état étant indicatif de l'état de la diffusion des données de paramétrage effectuée à l'étape a).

2. Procédé selon la revendication 1, dans lequel l'étape a) comprend la diffusion des données de paramétrage entre une heure de début de paramétrage et une heure de fin de paramétrage, et dans lequel l'indicateur d'état est indicatif de l'heure de début de paramétrage ou de l'heure d'arrêt de paramétrage.

3. Procédé selon l'une des revendications 1 ou 2, dans lequel l'étape b) comprend la diffusion des données temps réel entre une heure de début planifiée et une heure d'arrêt planifiée, et dans lequel l'indicateur d'état est indicatif de l'heure de début planifiée ou de l'heure d'arrêt planifiée.

4. Procédé selon l'une quelconque des revendications précédentes, comprenant de plus la diffusion de données de guide de programme électronique (GPE) vers les interfaces utilisateur, les données GPE étant indicatives de l'heure de début planifiée pour la diffusion des données temps réel.

5. Procédé selon la revendication 4, dans lequel les données GPE sont modifiées selon l'indicateur d'état, de façon à donner une indication visuelle de l'état de l'indicateur d'état.

6. Procédé selon la revendication 5, dans lequel la façon selon laquelle le nom de l'application est affiché pour l'utilisateur est indicative de l'état de l'indicateur d'état.

7. Dispositif de diffusion d'une application interactive planifiée à une pluralité d'utilisateurs par l'intermédiaire d'interfaces utilisateur respectives, le dispositif comprenant :
a) des moyens (2) pour placer les données de paramétrage sur un carrousel de diffusion avant une heure de début planifiée, de sorte que les données de paramétrage soient diffusées de façon répétée vers les interfaces utilisateur ; et
b) des moyens (14, 15) pour la diffusion de données temps réel se rapportant à l'application aux interfaces utilisateur à l'heure de début planifiée, dans lequel le dispositif comprend de plus :
c) des moyens (14, 15) pour diffuser un indicateur d'état aux interfaces utilisateur, l'indicateur d'état étant indicatif de l'état des moyens de diffusion de données de paramétrage.

8. Dispositif selon la revendication 7, comprenant de plus des moyens (14, 15) pour la diffusion de données de guide de programme électronique (GPE) aux interfaces utilisateur, les données GPE spécifiant l'heure de début planifiée de la diffusion des données temps réel.
